Europäisches Patentamt

European Patent Office

Office européen des brevets

(19)

(11) Veröffentlichungsnummer: **0 265 380 B1**

(12) # EUROPÄISCHE PATENTSCHRIFT

(45) Veröffentlichungstag der Patentschrift: **19.06.91**

(51) Int. Cl.⁵: **B23B 31/02, B23Q 3/12**

(21) Anmeldenummer: **87810578.2**

(22) Anmeldetag: **07.10.87**

(54) **Handgerät mit lösbarem Werkzeughalter.**

(30) Priorität: **23.10.86 DE 3636027**

(43) Veröffentlichungstag der Anmeldung:
**27.04.88 Patentblatt 88/17**

(45) Bekanntmachung des Hinweises auf die
Patenterteilung:
**19.06.91 Patentblatt 91/25**

(84) Benannte Vertragsstaaten:
**CH DE FR GB LI NL SE**

(56) Entgegenhaltungen:
| | |
|---|---|
| **AT-B- 233 355** | **CH-A- 624 870** |
| **DE-A- 2 335 031** | **DE-A- 3 310 371** |
| **DE-A- 3 413 581** | **US-A- 3 947 047** |

(73) Patentinhaber: **HILTI Aktiengesellschaft**

**FL-9494 Schaan(LI)**

(72) Erfinder: **Lippacher, Wolfgang**
**Bucherweg 26**
**W-8036 Herrsching(DE)**
Erfinder: **Riedl, Reinhard**
**Rennweg 4**
**W-8061 Grossenzemoos(DE)**

(74) Vertreter: **Wildi, Roland**
**Hilti Aktiengesellschaft Patentabteilung**
**FL-9494 Schaan(LI)**

EP 0 265 380 B1

## Beschreibung

Die Erfindung betrifft ein Handgerät, wie Bohrmaschine, Bohrhammer, Schrauber und dergleichen, mit an einer Drehspindel des Gerätes angeordnetem lösbarem Werkzeughalter zur Aufnahme von Werkzeugen, wobei der Werkzeughalter einen mit der Drehspindel in Eingriff stehenden, die Drehspindel mit einem hülsenförmigen Bereich teilweise übergreifenden Futterkörper aufweist und der Futterkörper mit der Drehspindel drehschlüssig verbunden ist.

Bei Handgeräten der in Rede stehenden Art besteht häufig der Bedarf, die Wirkungsweise der einen Gerätegattung bei einer anderen Gerätegattung auszunutzen. So kommt es relativ häufig vor, dass beispielsweise ein Bohrhammer, dessen Schlagbewegung abschaltbar ist, als reine Bohrmaschine verwendet wird. Um die diesbezüglich erforderlichen Werkzeuge zu spannen, muss der Bohrhammer mit einem entsprechendem Werkzeughalter versehen werden, was in der Regel dadurch erfolgt, dass ein solcher Werkzeughalter ein der Aufnahme des Bohrhammers entsprechendes Einsteckende aufweist.

Solche Umrüstungen sind mit dem Nachteil behaftet, dass einerseits der Rund- und Planlauf der eingespannten Werkzeuge nicht mehr gewährleistet ist und andererseits die Uebertragung des Drehmomentes sowie der Axialkraft über Spiel erfolgt. Ausserdem führen solche Lösungen zu einer grossen Baulänge des Handgerätes.

Anstelle solcher sogenannter Adapter-Lösungen den gesamten Werkzeughalter auszutauschen, konnte sich nicht durchsetzen, da keine Lösungen bekannt sind, die ein Austauschen ohne hohen Zeit- und Werkzeugaufwand ermöglichen. So ist beispielsweise auch der aus der DE-OS 33 10 371 bekannte Werkzeughalter nur mit besonderem Werkzeugaufwand von der Drehspindel des Handgerätes lösbar. In diesem Falle muss mittels eines Werkzeuges eine Stellschraube gelöst und danach ein Stellring in eine bestimmte Lage versetzt werden, so dass Spannelemente die Verbindung zwischen Futterkörper und Drehspindel freigeben. Ausserdem erfordert die aus dieser Veröffentlichung bekannte Art der Verbindung zwischen Werkzeughalter und Drehspindel einen relativ langen Führungsbereich zum Führen des Werkzeughalters auf der Drehspindel, so dass ein ausreichender Rund- und Planlauf gewährleistet ist.

Der Erfindung liegt die Aufgabe zugrunde, ein Handgerät zu schaffen, dessen Werkzeughalter ohne Hilfswerkzeuge austauschbar ist, wobei die Verbindung zwischen Werkzeughalter und Drehspindel Rund- und Planlauf gewährleistet sowie kurze Baulänge erlaubt.

Erfindungsgemäss wird die Aufgabe durch die Merkmale des Kennzeichens des Anspruchs 1 gelöst.

Das Verbinden des Werkzeughalters mit der Drehspindel über kegelige Stützflächen am Futterkörper und an der Drehspindel führt zu einem spielfreien konzentrischen Eingriff, der sowohl Rund- als auch Planlauf gewährleistet. Die Baulänge kann kurz gehalten werden, da hierfür nur die Länge der kegeligen Stützflächen massgeblich ist. Um das Lösen des Eingriffs der Stützflächen zu erleichtern, liegt deren Kegelwinkel ausserhalb der Selbsthemmung und beträgt zweckmässig 25 bis 35°. Die kegeligen Stützflächen sind durch einen Kegelzapfen und eine Kegelöffnung gebildet, wobei der Kegelzapfen vorzugsweise an der Drehspindel und die Kegelöffnung sich am Futterkörper befindet.

Dem spielfreien Eingriff des Kegelzapfens in die Kegelöffnung dienen vorzugsweise mehrere in Umfangsrichtung des Werkzeughalters gleichmässig verteilte, in Durchtrittsöffnungen des Futterkörpers geführte Spannelemente, welche von der Feder gegen die dem freien Ende der Drehspindel benachbarte geneigte Flanke der Ausnehmung gedrückt werden. Die Feder wird über eine Betätigungshandhabe von aussen gespannt. Die Flanke erstreckt sich von der Mantelfläche der Drehspindel zum Grund der Ausnehmungen hin zweckmässig unter einem Winkel von etwa 45° zur Drehspindelachse. Zufolge des Abstützens der Spannelemente an der Flanke treten diese nicht mit dem Grund der Ausnehmungen in Kontakt und bewirken so eine axiale Kraftkomponente, welche das stete spielfreie Eingreifen der kegeligen Stützflächen bewirkt. Den Spannelementen kommt die Funktion der axialen Halterung des Werkzeughalters auf der Drehspindel zu; das Uebertragen allfälliger Drehbewegung erfolgt zweckmässig durch separate, vorzugsweise formschlüssige Uebertragungsmittel, wie beispielsweise Keilwellenverzahnungen.

Mit Vorteil ist die Ausnehmung zum Einrücken der Spannelemente als eine umlaufende Ringnut ausgebildet. Eine Ringnut ist einfach herstellbar und vereinfacht das Verbinden des Werkzeughalters mit der Drehspindel, indem der Werkzeughalter in jeder beliebigen Drehstellung aufgesteckt werden kann, da die Spannelemente so unabhängig von der Drehstellung stets in die Ringnut einrücken können.

Einfachheitshalber sind die Spannelemente als Kugeln ausgebildet. Bei Kugeln handelt es sich nicht nur um kostengünstige Massenartikel sondern auch um ein Element, das sich durch formbedingt einfache Montage und Funktion auszeichnet.

Die Feder beaufschlagt die Spannelemente möglichst radial, um die gesamte Kraft der Feder ohne Verluste durch Umlenkung zum Einrücken der Spannelemente zu nutzen. Ebenso werden dieserart Klemmeffekte verhindert.

Nach einer bevorzugten Ausführungsform ist die Feder als die Spannelemente beaufschlagende Ringfeder ausgebildet, deren Innenseite unter Vorspannung auf dem hülsenförmigen Bereich des Futterkörpers sitzt und die Spannelemente in die Ringnut einrückt.

Die Ringfeder ist mit Vorteil in der Axialprojektion polygonartig ausgebildet, wobei die Anzahl der Ecken der Anzahl Spannelemente entsprechen kann. Je nach Drehstellungen der Ringfeder stehen den Spannelementen die Seitenflächen oder die Ecken der Innenseite der Ringfeder gegenüber. Die Seitenflächen der Ringfeder liegen unter Vorspannung gekrümmt an der Mantelfläche des hülsenförmigen Bereichs des Futterkörpers auf. Dadurch werden die Spannelemente bei entsprechender Drehstellung von den Seitenflächen in die Ausnehmungen eingerückt. Durch teilweises Verdrehen der Ringfeder lassen sich deren Ecken, die von der Mantelfläche des hülsenförmigen Bereichs radial beabstandet sind, in Deckung mit den Spannelementen bringen, so dass diese unter Ausrücken aus den Ausnehmungen in die Ecken entweichen können. Der Werkzeughalter kann sodann ohne nennenswerten Kraftaufwand axial von der Drehspindel abgezogen werden.

Nach einer weiteren Ausführungsform ist die Feder zum Beaufschlagen der Spannelemente als Tellerfederpaket ausgebildet.

Als Betätigungshandhabe für die Feder eignet sich bevorzugt eine gegenüber dem Futterkörper verdrehbare Griffhülse. In dieser kann die Ringfeder axial einseitig und drehschlüssig festgelegt sein. Der axial freistehende Abschnitt der Ringfeder dient dem Beaufschlagen der Spannelemente. Bei Verwendung von in den Durchtrittsöffnungen gelagerten Tellerfederpaketen stützen sich diese zweckmässig über einen Gleitschuh an der Innenseite der Griffhülse ab.

In Weiterbildung der Erfindung verfügt die Innenseite der Griffhülse hierzu über eine Steuerkontur mit der Anzahl Spannelemente entsprechender Anzahl Ausweichnischen für das Tellerfederpaket. In der Drehstellung der Griffhülse, in welcher die Ausweichnischen den Spannelementen radial nicht gegenüberstehen, bewirkt die Steuerkontur ein Spannen des Tellerfederpaketes und damit das Einrücken der Spannelemente in die Ausnehmungen, was zu dem angestrebten spielfreie Verspannen der kegeligen Stützflächen von Futterkörper und Drehspindel führt. Durch teilweises Verdrehen der Griffhülse gelangen die Ausweichnischen in die radiale Projektion der Spannelemente, wodurch die Federpakete entspannt werden und folgedessen die Spannelemente zum Wechsel des Werkzeughalters ausrücken können.

Zum Arretieren der Griffhülse in deren Funktionsstellungen können Rastmittel vorgesehen sein. Bei diesen Rastmitteln kann es sich beispielsweise um durch Federkraft beaufschlagte Kugeln handeln, die in der Griffhülse radial verschiebbar gelagert und in Rastöffnungen am Futterkörper einrückbar sind. Ferner können auch das Verdrehen der Griffhülse von der einen in die andere Funktionsstellung begrenzende Sperrmittel vorgesehen sein.

Die Erfindung wird nachstehend anhand von Zeichnungen, die Ausführungsbeispiele wiedergeben näher erläutert. Es zeigen:

Fig. 1    Ein Handgerät mit Werkzeughalter in Ansicht;

Fig. 2    eine vergrösserte Darstellung des mit einer Drehspindel verspannten Werkzeughalters nach Fig. 1, teilweise im Längsschnitt;

Fig. 3    einen Schnitt durch die Anordnung nach Fig. 2, gemäss Schnittverlauf III-III;

Fig. 4    die Anordnung analog Fig. 2 mit gegenüber der Drehspindel entspannten Werkzeughalter;

Fig. 5    einen Schnitt durch die entspannte Anordnung nach Fig. 4, gemäss Schnittverlauf V-V;

Fig. 6    eine weitere Ausführungsform eines mit einer Drehspindel verspannten Werkzeughalters im Längsschnitt;

Fig. 7    einen Schnitt durch die Anordnung nach Fig. 6, gemäss Schnittverlauf VII-VII;

Fig. 8    einen Schnitt analog Fig. 7 mit gegenüber der Drehspindel entspanntem Werkzeughalter.

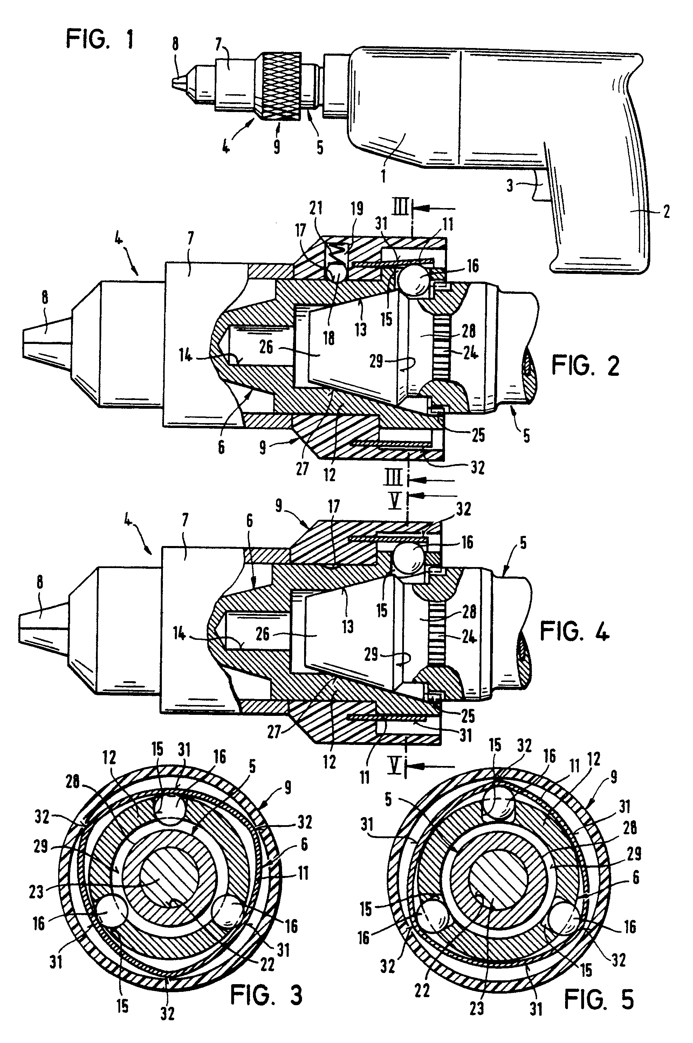

Das aus Fig. 1 ersichtliche Handgerät weist ein Gehäuse 1 mit einem seitlich abragendem Handgriff 2 auf. Dem Ein- und Ausschalten des Handgerätes dient ein Drücker 3. Ein insgesamt mit 4 bezeichneter Werkzeughalter ist lösbar mit einer insgesamt mit 5 bezeichneten Drehspindel verbunden.

Der in Fig. 2 vergrössert dargestellte Werkzeughalter 4 verfügt über einen insgesamt mit 6 bezeichneten Futterkörper, eine Stellhülse 7 für Spannbacken 8 und eine insgesamt mit 9 bezeichnete Griffhülse, in welcher eine Ringfeder 11 axial einseitig festgelegt ist. Der Futterkörper 6 weist zur Drehspindel 5 hingewandt einen hülsenförmigen Bereich 12 mit einer Kegelöffnung 13 auf. In Verjüngungsrichtung schliesst sich an die Kegelöffnung 13 eine abgestufte zylindrische Grundbohrung 14 an. In der Zone des erweiterten Auslaufs der Kegelöffnung 13 ist der hülsenförmige Bereich 12 mit drei Durchtrittsöffnungen 15 versehen, die, wie der Fig. 3 entnommen werden kann, in Umfangsrichtung des Futterkörpers 6 gleichmässig verteilt sind. In jeder Durchtrittsöffnung 15 sitzt eine Kugel 16. Radial nach aussen stützen sich die Kugeln 16 an dem freistehenden Abschnitt der Ringfeder 11 ab.

Der Futterkörper 6 verfügt ferner aussenseitig über Rastvertiefungen 17 zum Eingriff eines kugeligen Rastkörpers 18 zwecks Festlegens der Griffhülse 9 in einer jeweils funktionsbezogenen Drehstellung gegenüber dem Futterkörper 6. Der Rastkörper 18 ist in einer Aussparung 19 der Griffhülse 9 radial verschiebbar gelagert und von einer Druckfeder 21 beaufschlagt.

Die Drehspindel 5 ist von einer Zentralbohrung 22 durchsetzt, in welcher, wie der Fig. 3 entnommen werden kann, ein andeutungsweise erkennbarer Schlagübertragungsdöpper 23 geführt ist. Zur Uebertragung von Drehbewegung ist an der Drehspindel 5 eine Keilwellenverzahnung 24 vorgesehen, die mit einer gegengleichen Keilwellenverzahnung 25 am Futterkörper 6 in Eingriff steht. Der freie Endabschnitt 26 der Drehspindel 5 ist als Kegelzapfen 27 ausgebildet, dessen Kegelwinkel mit dem Kegelwinkel der Kegelöffnung 13 korrespondiert. In Erweiterungsrichtung ist der Kegelzapfen 27 durch eine umlaufende Ringnut 28 begrenzt. Die Axialerstreckung der Ringnut 28 verkürzt sich zu deren Grund hin, wobei diese Verkürzung durch entsprechende Neigung einer dem freien Ende des Kegelzapfens 27 zugewandten Flanke 29 erzielt wird. Bei in die Kegelöffnung 13 eingeführtem Kegelzapfen 27 stützen sich die Kugeln 16 unter der Kraft der vorgespannten Ringfeder 11 an der Flanke 29 ab, wodurch ein spielfreies Verspannen des Kegelzapfens 27 in der Kegelöffnung 13 erreicht wird.

Der Fig. 3 ist ferner zu entnehmen, dass die Ringfeder 11 in Axialprojektion polygonartig ausgebildet ist. Die durch Vorspannung gekrümmten, an der Mantelfläche des hülsenförmigen Bereichs 12 aufliegenden Seitenflächen 31 halten in der in Fig. 2 und 3 gezeigten Drehstellung die Kugeln 16 eingerückt in der Ringnut 28. Durch Drehen der als gleichseitiges Bogendreieck ausgebildeten Ringfeder 11 um 60° gelangen die von der Mantelfläche des Bereichs 12 radial beabstandeten Ecken 32 der Ringfeder 11 in Radialprojektion zu den Kugeln 16. Die Kugeln 16 können somit zu den Ecken 32 hin aus der Ringnut 28 entweichen, wie dies die Fig. 4 und 5 zeigen. In dieser durch Betätigen der Griffhülse 9 erzielten Drehstellung der Ringfeder 11 kann der Werkzeughalter 4 ohne nennenswerten Kraftaufwand und ohne Einsatz von Hilfswerkzeugen von der Drehspindel 5 abgezogen oder gegebenenfalls auf diese aufgesteckt werden. Zum Verspannen wird die Ringfeder 11 wieder um 60° in die den Fig. 2 und 3 entnehmbare Drehstellung gebracht.

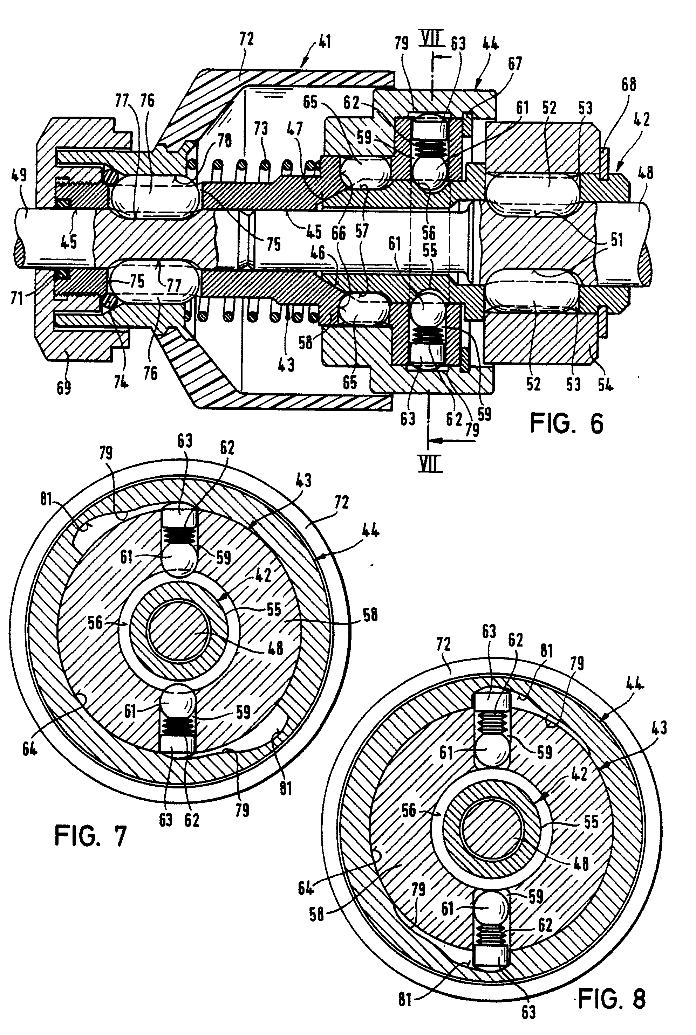

Einen für Drechschlagbetrieb geeigneten insgesamt mit 41 bezeichneten Werkzeughalter zeigen die Fig. 6 bis 8. Dieser sitzt wiederum auf einer insgesamt mit 42 bezeichneten Drehspindel.

Der Werkzeughalter 41 verfügt über einen insgesamt mit 43 bezeichneten Futterkörper, auf dem eine insgesamt mit 44 bezeichnete Griffhülse verdrehbar gelagert ist. Der Futterkörper 43 ist von einer zylindrischen Längsbohrung 45 durchsetzt, an die zur Drehspindel 42 hin eine Kegelöffnung 46 zum Eingriff der Drehspindel 42 anschliesst. Für den spielfreien zentrischen Eingriff weist die Drehspindel 42 einen korrespondierenden Kegelzapfen 47 auf.

Die Drehspindel 42 ist von einem Schlagübertragungsdöpper 48 durchgriffen, der einerseits der Drehspindel 42 die Drehbewegung vermittelt und andererseits einem in der Längsbohrung 45 geführten Werkzeug 49 Schlagimpulse erteilt.

Der Drehung ausführende Schlagübertragungsdöpper 48 weist Mitnahmenuten 51 auf, in die walzenförmige Verriegelungselemente 52, die in Durchbrüchen 53 der Drehspindel 42 gelagert sind, zur Uebertragung der Drehbewegung eingreifen. Die Verriegelungselemente 52 werden von einem Stützring 54 in Eingriffsstellung gehalten.

Der in den Futterkörper 43 eingreifende Abschnitt der Drehspindel 42 ist mit einer umlaufenden Ringnut 55 versehen, deren axiale Erstreckung zum Grund hin sich verkürzt. Zu dieser Verkürzung trägt die Neigung der dem freien Ende der Drehspindel benachbarten Flanke 56 der Ringnut 55 bei. Im Längsabschnitt zwischen der Ringnut 55 und dem Kegelzapfen 47 sind in die Mantelfläche der Drehspindel 42 einander diametral gegenüberliegende muldenförmige Vertiefungen 57 eingebracht.

Der einen Teil der Drehspindel 42 aufnehmende hülsenförmige Bereich 58 des Futterkörpers 43 ist im freien Endbereich mit sich radial erstreckenden Durchtrittsöffnungen 59 versehen. In diesen ist jeweils eine Kugel 61 verschiebbar gelagert und von einem Tellerfederpaket 62 normal zur Werkzeughalterachse hin beaufschlagt. Das Tellerfederpaket 62 wird durch einen Gleitschuh 63 zur Innenseite 64 der Griffhülse 44 hin abgestützt. In der gezeigten Funktionsstellung ist das Tellerfederpaket 62 gespannt und drückt die Kugel 61 gegen die Flanke 56. Dadurch kommt es zum spielfreien Verspannen des Kegelzapfens 47 in der Kegelöffnung 46.

In die Vertiefungen 57 an der Drehspindel 42 greifen wiederum walzenförmige Verriegelungselemente 65 ein, die in Durchbrüchen 66 des Futterkörpers radial verschiebbar gelagert sind. Die Verriegelungselemente 65 stützen sich radial nach aussen an der Griffhülse 44 ab. Sicherungsringe 67, 68 unterbinden das axiale Verschieben der Griffhülse 44 und des Stützringes 54.

Auf den Futterkörper 43 ist im freien Endbereich ein Anschlagring 69 aufgeschraubt. Ein elastischer Ring 71 dient dem Abdichten des Werkzeugs 49. Auf dem Futterkörper 43 ist eine Zustellmanschette 72 verschiebbar gelagert. Eine Zylinderfeder 73 treibt die Zustellmanschette 72 in die gezeigte Auflaufstellung gegen den Anschlagring 69. Ein weiterer elastischer Ring 74 dämpft dabei den Aufschlag der Zustellmanschette 72. In Durchbrüchen 75 des Futterkörpers 43 sind weiterum walzenförmige Verriegelungselemente 76 radial verschiebbar gelagert. Diese werden zur Halterung und Drehmitnahme des Werkzeugs 49 in werkzeugseitige Mitnahmenuten 77 eingerückt. Hierzu dient eine an der Zustellmanschette 72 innenseitig vorgesehene Zustellkontur 78. Für das Ausrücken der Verriegelungselemente 76 wird die Zustellmanschette 72 gegen die Kraft der Zylinderfeder 73 zur Drehspindel 42 hin verschoben, wodurch Vertiefungen der Zustellkontur 78 in Radialprojektion zu den Verriegelungselementen 76 gelangen und ein Ausrücken der Verriegelungselemente 76 erlauben.

Die Fig. 7 und 8 verdeutlichen das Zusammenwirken der Griffhülse 44 mit den Tellerfederpaketen 62. Die Innenseite 64 der Griffhülse 44 weist in Umfangsrichtung sich erstreckende Steuerkonturen 79 auf, die für das Entspannen der Tellerfederpakete 62 und damit für das Ausrücken der Kugeln 61 über Ausweichnischen 81 verfügen. In Spannstellung sind die Ausweichnischen 81, wie der Fig. 7 entnehmbar, ausserhalb der Radialprojektion der Gleitschuhe 63. Durch teilweises Verdrehen der Griffhülse 44 gelangen die Ausweichnischen 81, wie der Fig. 8 entnehmbar, in die Radialprojektion der Gleitschuhe 63, so dass der Werkzeughalter 41 abgezogen bzw aufgesteckt werden kann.

**Ansprüche**

1. Handgerät, wie Bohrmaschine, Bohrhammer, Schrauber und dergleichen, mit an einer Drehspindel (5, 42) des Gerätes angeordnetem lösbarem Werkzeughalter (4, 41) zur Aufnahme von Werkzeugen (49), wobei der Werkzeughalter (4, 41) einen mit der Drehspindel (5, 42) in Eingriff stehenden, die Drehspindel mit einem hülsenförmigen Bereich (12, 58) teilweise übergreifenden Futterkörper (6, 43) aufweist und der Futterkörper mit der Drehspindel (5, 42) drehschlüssig verbunden ist, **dadurch gekennzeichnet**, dass die Drehspindel (5, 42) und der Futterkörper (6, 43) miteinander korrespondierende in Eingriff tretende kegelige Stützflächen aufweisen, die durch einen Kegelzapfen (27, 47) an einem und eine Kegelöffnung (13, 46) am anderen Teil gebildet sind, und die Drehspindel (5, 42) eine Ausnehmung (28, 55) mit sich zum Grund hin verkürzender Axialerstreckung und einer dem freien Ende benachbarten geneigten Flanke (29, 56) aufweist, und ein sich an der Flanke (29, 56) abstützendes, von einer mittels einer Betätigungshandhabe (9, 44) aktivierbaren Feder (11, 62) beaufschlagtes, in einer radialen Durchtrittsöffnung (15, 59) hülsenförmigen Bereichs (12, 58) des Futterkörpers (6, 43) gelagertes Spannelement (16, 61) vorgesehen ist, dessen Axialerstreckung höchstens der kleinsten Axialerstreckung der Ausnehmung (28, 55) entspricht.

2. Handgerät nach Anspruch 1, dadurch gekennzeichnet, dass die Ausnehmung als umlaufende Ringnut (28, 55) ausgebildet ist.

3. Handgerät nach Anspruch 1 oder 2, dadurch gekennzeichnet, dass das Spannelement als Kugel (16, 61) ausgebildet ist.

4. Handgerät nach einem der Ansprüche 1 bis 3, dadurch gekennzeichnet, dass die Feder als das Spannelement (16) beaufschlagende Ringfeder (11) ausgebildet ist.

5. Handgerät nach Anspruch 4, dadurch gekennzeichnet, dass die Ringfeder (11) in der Axialprojektion polygonartig ausgebildet ist.

6. Handgerät nach einem der Ansprüche 1 bis 3, dadurch gekennzeichnet, dass die Feder als Tellerfederpaket (62) ausgebildet ist.

7. Handgerät nach einem der Ansprüche 1 bis 6, dadurch gekennzeichnet, dass die Betätigungshandhabe für die Feder (11, 62) als verdrehbare Griffhülse (9, 44) ausgebildet ist.

8. Handgerät nach Anspruch 7, dadurch gekennzeichnet, dass die Griffhülse (44) an der Innenseite (64) Ausweichnischen (81) für die Feder (62) aufweist.

**Claims**

1. Hand tool, such as a drill, hammer drill, screwdriver and the like, comprising a detachable tool holder (4, 41), which is arranged at a rotary spindle (5, 42) of the tool and serves to accommodate tools (49), in which respect the tool holder (4, 41) comprises a chuck body (6, 43) which engages the rotary spindle (5, 42) and partially reaches over the rotary spindle with a sleeve-like area (12, 58), and the chuck body is rotatingly connected to the rotary spindle (5, 42), **characterised in that** the rotary spindle (5, 42) and the chuck body (6, 43) comprise engaging conical support surfaces which correspond to one another and which are formed by a tapered pin (27, 47) at the one part and a tapered aperture (13, 46) at the other, and that the rotary spindle (5, 42) comprises a recess (28, 55), the axial extent of which shortens towards the base, a slanted flank (29, 56), which is adjacent to the free end, and that a clamping element (16, 61) is provided, which supports itself against the flank (29, 56), is loaded by a spring (11, 62) which is activated by means of an operating means (9, 44), and which is mounted in a radial passage (15, 59) of the sleeve-shaped area (12, 58) of the chuck body (6, 43), whereby the axial extent corresponds to not more than the smallest axial extent of the recess (28, 55).

2. Hand tool according to claim 1, **characterised in that** the recess is a peripheral circular groove (28, 55).

3. Hand tool according to claim 1 or 2, **characterised in that** the clamping element is a ball (16, 61).

4. Hand tool according to one of claims 1 to 3, **characterised in that** the spring is the clamping element (16) which loads the annular spring (11).

5. Hand tool according to claim 4, **characterised in that** the annular spring (11) is polygonal in the axial projection.

6. Hand tool according to one of claims 1 to 3, **characterised in that** the spring is a cup-spring assembly (62).

7. Hand tool according to one of claims 1 to 6, **characterised in that** the operating means for the spring (11, 62) is a rotatable handle sleeve (9, 44).

8. Hand tool according to claim 7, **characterised in that** the handle sleeve (44) has escape areas (81) for the spring (62) at its inside.

## Revendications

1. Appareil portatif, tel que perceuse, marteau perforateur, tournevis et analogues, comprenant un porte-outil démontable (4, 41) monté sur une broche tournante (5, 42) de l'appareil et destiné à recevoir des outils (49), le porte-outil (4, 41) étant muni d'un corps de mandrin (6, 43) en prise avec la broche tournante (5, 42) et recouvrant partiellement la broche tournante avec une section (12, 58) en forme de douille, et le corps de mandrin étant solidarisé en rotation avec la broche tournante (5, 42), **caractérisé en ce** que la broche tournante (5, 42) et le corps de mandrin (6, 43) présentent des surfaces d'appui coniques complémentaires venant en prise l'une avec l'autre et constituées par un tourillon conique (27, 47) sur l'un desdits éléments et par une ouverture conique (13, 46) sur l'autre élément; que la broche tournante (5, 42) présente un évidement (28, 55) présentant une extension axiale se réduisant en direction du fond et un flanc incliné (29, 56) au voisinage de l'extrémité libre; et qu'il est prévu un élément de serrage (16, 61) qui est placé dans une ouverture de passage radiale (15, 59) de la section (12, 58) en forme de douille du corps de mandrin (6, 43), s'appuie sur le flanc (29, 56), et est sollicité par un ressort (11, 62) lequel peut être activé au moyen d'une prise de manoeuvre (9, 44), et dont l'extension axiale correspond au plus à l'extension axiale minimale de l'évidement (28, 55).

2. Appareil portatif selon la revendication 1, caractérisé en ce que l'évidement est conformé en rainure annulaire continue (28, 55).

3. Appareil portatif selon l'une des revendications 1 ou 2, caractérisé en ce que l'élément de serrage est conformé en bille (16, 61).

4. Appareil portatif selon l'une des revendications 1 à 3, caractérisé en ce que le ressort est conformé en ressort annulaire (11) qui sollicite l'élément de serrage (16).

5. Appareil portatif selon la revendication 4, caractérisé en ce que le ressort annulaire (11) présente dans la projection axiale une forme polygonale.

6. Appareil portatif selon l'une des revendications 1 à 3, caractérisé en ce que le ressort est réalisé sous forme de paquet de rondelles-ressorts (62).

7. Appareil portatif selon l'une des revendications 1 à 6, caractérisé en ce que la prise de manoeuvre pour le ressort (11, 62) est conformée en douille de prise tournante (9, 44).

8. Appareil portatif selon la revendication 7, caractérisé en ce que la douille de prise (44) comporte sur la face intérieure (64) des niches de dégagement (81) pour le ressort (62).

FIG. 1

FIG. 2

FIG. 3

FIG. 4

FIG. 5

7

FIG. 6

FIG. 7

FIG. 8